# FASCICULE DE BREVET EUROPEEN

(11) **EP 1 798 429 B1**
(45) Date de publication et mention de la délivrance du brevet: **11.06.2008**
(21) Numéro de dépôt: 06356145.0
(22) Date de dépôt: 14.12.2006
(51) Int. Cl.: F16C 7/06, F16C 3/02

(54) **Bielle a tube en un materiau composite et procede de fabrication d'une telle bielle**
Rohrförmige Pleuelstange aus einem Verbundmaterial und ein entsprechendes Herstellungsverfahren
Composite material tube rod and manufacturing method of such rod

(30) Priorité: 15.12.2005 FR 0512750
(43) Date de publication de la demande: 20.06.2007
(73) Titulaire: SKF Aerospace France, 26240 Saint-Vallier-sur-Rhone (FR)
(72) Inventeur: Genot, Michel, 39140 Relans (FR); Buchin, Jean-Michel, Lons le Saunier (FR); Maheo, Yves, 26140 Anneyron (FR)
(74) Mandataire: Grand, Guillaume

(56) Documents cités:
- EP-A- 0 373 529
- GB-A- 2 051 304
- GB-A- 2 053 766
- US-A- 4 851 065

## Description

La présente invention concerne une bielle à tube constitué d'un matériau composite, ainsi qu'un procédé de fabrication d'une telle bielle.

Afin de transmettre des mouvements et/ou des efforts, il est connu, notamment dans le domaine aéronautique, d'utiliser des bielles dont le corps de bielle est constitué d'un tube en un matériau composite à matrice en matière plastique. Ce tube allie alors légèreté et résistance à la fois en traction et en compression. Les tolérances de montage de ces bielles nécessitent qu'elles soient réglables en longueur afin de faciliter leur fixation à leurs extrémités. A cet effet, la bielle comporte un embout d'extrémité permettant la fixation ou le raccordement de la bielle par rapport à une pièce de structure, la position, suivant l'axe longitudinal du tube, de cet embout pouvant être ajustée par rapport à l'extrémité correspondante du tube. Pour ce faire, l'embout est à même d'être vissé dans un insert métallique solidarisé fixement à l'extrémité du tube. Par vissage/dévissage de l'embout par rapport à l'insert, la longueur effective de la bielle peut être ajustée.

On comprend que la liaison fixe entre l'insert métallique et le tube en matériau composite se doit d'être aussi résistante que possible. Actuellement, plusieurs types de liaison sont utilisés à cette fin.

Selon une première solution, l'insert métallique est collé ou riveté autour du tube, le niveau de résistance de la liaison étant alors lié soit au cisaillement de la colle, soit au matage du tube par les rivets.

Une seconde possibilité consiste à co-injecter l'insert métallique avec le tube, le niveau de résistance de la liaison entre ces éléments étant alors lié au cisaillement de la matière plastique formant la matrice du matériau composite constituant le tube.

Une troisième solution consiste à former l'extrémité du tube directement autour de l'insert, grâce à des procédés consistant à enrouler autour de l'insert des filaments de fibres et de résine. Ainsi, EP-A-O 373 529 propose d'enrouler des filaments à base de carbone et de verre, autour d'une partie cannelée d'un insert et d'un mandrin amovible supportant cet insert, jusqu'à l'obtention d'une épaisseur filamentaire suffisante. En retirant ensuite ce mandrin, on obtient un tube de bielle, dont l'une de ses extrémités est « enroulée » autour de l'insert. De même, US-A-4,851,065 propose de fabriquer une structure enroulée du même genre, mais un peu plus complexe : un tube de bielle est fabriqué en enroulant des filaments de fibre et de résine autour d'un mandrin, étant précisé que, au niveau de chaque extrémité de ce tube en cours de formation, les filaments sont directement enroulés autour d'une partie cannelée d'un insert, avec interposition, entre des couches filamentaires d'épaisseur suffisante, de manchons et de couches intercalaires composites, successivement rapportés autour de l'insert.

Dans tous les cas, le niveau des contraintes à rupture est souvent insuffisant pour garantir la périnité mécanique de la bielle, étant ajouté que le troisième genre de solution évoqué ci-dessus s'avère très onéreux à mettre en oeuvre. En outre, le matériau métallique constituant l'insert présente généralement un coefficient de dilatation nettement supérieur à celui du matériau composite constituant le tube de sorte que, pour des variations de température courantes dans le domaine aéronautique, notamment entre -54°C et +200°C, la dilatation de l'insert provoque l'affaiblissement de la liaison avec le tube. C'est en particulier le cas pour des inserts constitués d'aluminium ou d'un alliage d'aluminium, très utilisés dans le domaine aéronautique.

Le but de la présente invention est de proposer une bielle à tube en un matériau composite, qui garantisse un niveau de résistance satisfaisant en ce qui concerne la liaison fixe entre ce tube et un insert de liaison mécanique avec un embout d'extrémité de la bielle.

A cet effet, l'invention a pour objet une bielle telle que définie à la revendication 1.

En prévoyant, selon l'invention, que la liaison fixe entre le tube composite et l'insert est réalisée par la coopération d'une partie taraudée de l'extrémité du tube et d'une partie filetée de l'insert, par vissage de ces deux parties l'une à l'autre, le niveau de résistance de cette liaison permet de supporter des contraintes à rupture très importantes, notamment beaucoup plus élevées que celles supportées par les autres types de liaison évoqués ci-dessus. En effet, au sein de la bielle selon l'invention, la liaison tube/insert repose sur une accroche mécanique vissée entre les parties taraudée et filetée précitées, ce type de liaison n'étant jamais jusqu'alors envisagé en raison de la nature composite du tube, qui est traditionnellement admise comme ne pouvant pas être facilement usinée, notamment taraudée avec précision. En outre, grâce à cette coopération mécanique par complémentarité de formes, on s'affranchit du problème des dilatations différentielles entre l'insert et le tube, en particulier lorsque cet insert est de nature métallique. En effet, la tenue mécanique est, dans une mesure non négligeable, indépendante de la profondeur de pénétration du filetage de l'insert dans le taraudage du tube : la dilatation de la matière constituant l'insert, dans la plage des températures rencontrées dans le domaine aéronautique, ne fait varier que très faiblement la hauteur de son filetage et ne va donc pas affaiblir sa liaison vissée avec le taraudage du tube en matériau composite. Un autre avantage de la bielle selon l'invention réside dans sa capacité à pouvoir être facilement contrôlée, à 100% : la nature composite du tube permet d'utiliser de manière fiable des méthodes de contrôle non destructrices, telles que l'application d'ultra-sons, particulièrement efficace pour garantir la qualité de la liaison tube/insert, ainsi que la qualité de l'ensemble du volume composite.

D'autres caractéristiques avantageuses de cette bielle, prises isolément ou suivant toutes les combinaisons techniquement possibles, sont énoncées aux revendications 2 à 8.

L'invention a également pour objet un procédé de fabrication d'une bielle, tel que défini à la revendication 9.

Ce procédé permet d'obtenir une bielle telle que définie ci-dessus. Le procédé selon l'invention permet ainsi d'obtenir une bielle dont la liaison tube/insert présente un haut niveau de résistance.

Une caractéristique avantageuse de ce procédé est définie à la revendication 10.

L'invention sera mieux comprise à la lecture de la description qui va suivre, donnée uniquement à titre d'exemple et faite en se référant aux dessins sur lesquels :
- la figure 1 est une vue en perspective et en éclatée d'une bielle selon l'invention ;
- la figure 2 est une vue en élévation, avec une zone arrachée suivant une coupe longitudinale, d'un tube et d'un insert, liés fixement l'un à l'autre, appartenant à la bielle de la figure 1 ; et
- la figure 3 est une vue à plus grande échelle du détail cerclé III à la figure 2.

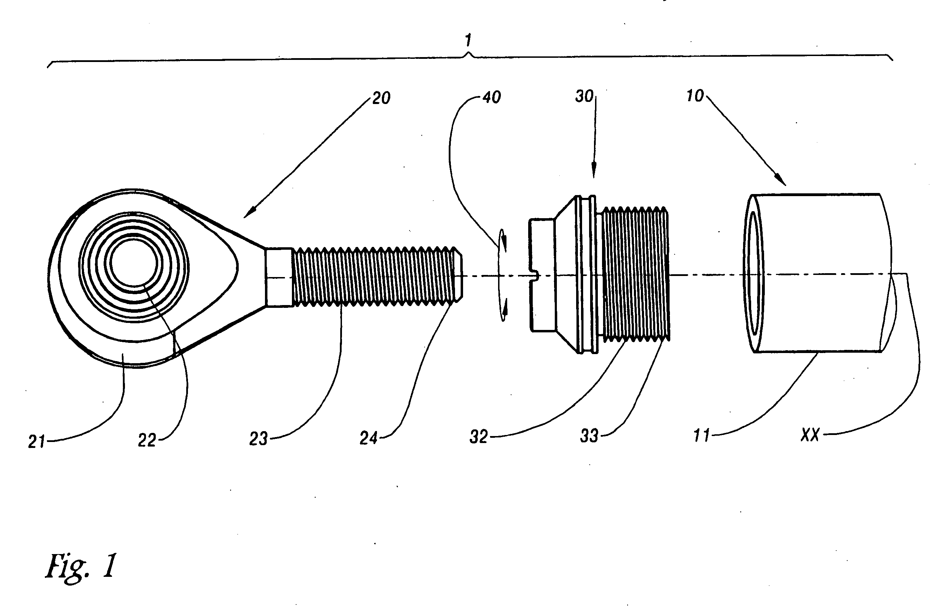

Sur la figure 1 est représentée une bielle 1 s'étendant globalement autour d'un axe longitudinal X-X. Cette bielle est destinée à transmettre des mouvements et/ou des efforts entre, par exemple, deux pièces de structure non représentées. La bielle 1 comporte essentiellement trois composants distincts adaptés pour être assemblés les uns aux autres, à savoir :
- un corps de bielle sous forme d'un tube 10 globalement cylindrique à base circulaire et d'axe X-X ; sur les figures, ce tube 10 n'est que partiellement représenté, l'extrémité longitudinale 11 du tube visible aux figures étant détaillée ci-après tandis que l'extrémité longitudinale opposée, non représentée, est destinée à être solidarisée à l'une des pièces de structure précitées ;
- un embout 20 agencé à l'extrémité 11 du tube et adapté pour fixer ou raccorder la bielle 1 par rapport à l'autre pièce de structure précitée ; dans l'exemple considéré aux figures, l'embout 20 est muni, à son extrémité 21 opposée au tube 10, d'un oeilleton de fixation 22 ; en variante non représentée, l'extrémité 21 peut être réalisée sous d'autres formes, par exemple sous forme d'une chape, d'un étrier, etc. ; et
- un insert 30 de liaison mécanique entre le tube 10 et l'embout 20, cet insert présentant une forme globalement tubulaire d'axe longitudinal X-X.

Dans l'exemple considéré, l'insert 30 est réalisé en aluminium tandis que le tube 10 est réalisé en un matériau composite à matrice en matière plastique, comme détaillé ci-après.

L'embout 20 et l'insert 30 sont prévus pour être fixés l'un à l'autre de manière réglable. Plus précisément, la partie 23 de l'embout dirigée vers le tube 10 se présente sous la forme d'une tige d'axe X-X, pourvue d'un filetage extérieur 24. L'insert 30 ménage intérieurement un alésage taraudé 31 débouchant du côté de l'insert opposé au tube. Le taraudage de cet alésage 31 est complémentaire au filetage 24 de sorte que l'embout 20 peut être vissé et dévissé dans l'alésage 31, comme indiqué par la flèche 40 à la figure 1. Lors de l'assemblage de l'embout à l'insert, la profondeur de vissage de la tige 23 dans l'alésage 31 dimensionne la longueur effective de la bielle 1, des moyens, non représentés, de verrouillage réversible de la position relative de ces deux pièces étant généralement prévus pour figer la structure une fois le réglage en longueur effectué.

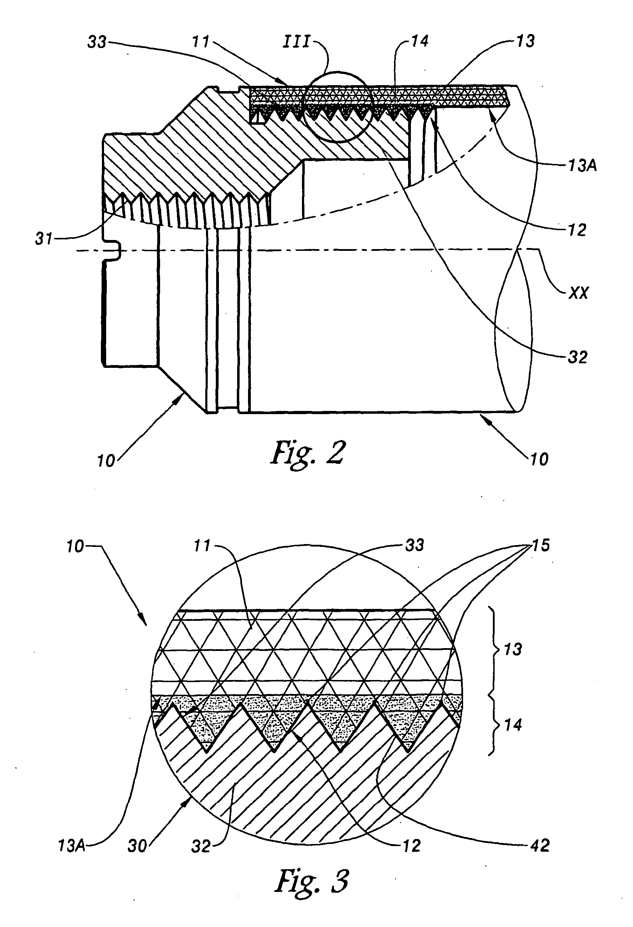

Le tube 10 et l'embout 20 sont quant à eux prévus pour être solidarisés l'un à l'autre de manière fixe. A cet effet, l'insert présente, le long de sa partie d'extrémité 32 tournée vers le tube, un filetage extérieur 33. L'extrémité 11 du tube 10 présente, quant à elle, un taraudage intérieur 12 sensiblement complémentaire du filetage 33, permettant le vissage de la partie 32 de l'insert à l'intérieur de l'extrémité 11 du tube, comme représenté aux figures 2 et 3. En assemblant le tube et l'insert par vissage complet, le taraudage 12 et le filetage 33 coopèrent par complémentarité de formes pour assurer la retenue axiale de ces deux pièces l'une par rapport à l'autre lorsque la bielle 1 subit des contraintes axiales en traction et/ou en compression.

Pour renforcer l'immobilisation en rotation entre le tube 10 et l'insert 30, une couche 42 d'une matière adhésive, visible uniquement à la figure 3, est avantageusement interposée entre le taraudage 12 et le filetage 33.

On va maintenant décrire un procédé de fabrication de la bielle 1.

On considère que, initialement, on dispose de l'embout 20 et de l'insert 30, ces pièces étant notamment obtenues par moulage d'aluminium puis par des usinages destinés à réaliser notamment les filetages 24 et 33, ainsi que l'alésage taraudé 31.

Indépendamment de l'obtention de l'embout 20 et de l'insert 30, on fabrique le tube 10 à partir d'une préforme fibreuse dans laquelle est injectée une matière plastique, telle qu'une résine epoxy, afin de former une matrice. La matière de cette matrice peut être pré-imprégnée dans la préforme. Cette préforme, qui, avant injection de la matrice, présente globalement une géométrie analogue à celle du tube 10 à obtenir, comporte, d'une part, un corps principal tubulaire et, d'autre part, une surépaisseur qui s'étend radialement en saillie vers l'intérieur à partir de la paroi interne du corps principal, au niveau d'une extrémité longitudinale de cette préforme destinée à constituer l'extrémité 11 du tube 10. Le corps principal de la préforme inclut, par exemple, des fibres de carbone tandis que la surépaisseur de la préforme inclut des fibres de verre, cette structure en gradins étant obtenue notamment par drapage de tissus en fibres de carbone et de tissus en fibres de verre. De la sorte, lorsque la matrice est injectée dans cette préforme, le corps principal de la préforme forme une paroi d'enveloppe extérieure 13 pour le tube 10, qui court sur toute la longueur du tube, tandis que la surépaisseur fibreuse forme, uniquement au niveau de l'extrémité 11 du tube, une surépaisseur composite 14 s'étendant radialement vers l'intérieur à partir de la face interne 13A de la paroi 13, comme représenté sur les figures 2 et 3 sur lesquelles la surépaisseur 14 est grisée.

Le taraudage 12 de l'extrémité 11 du tube 10 est alors obtenu par usinage direct de la surépaisseur 14. Le taraudage 12 est réalisé de façon complémentaire au filetage extérieur 33 de l'insert 30. La présence de cette surépaisseur facilite l'opération de taraudage. En outre, on comprend que l'utilisation de fibres de verre au niveau de cette surépaisseur est avantageux dans le sens où ces fibres sont moins abrasives que les fibres de carbone constituant la paroi d'enveloppe 13, permettant de réduire les efforts de coupe lors de l'usinage du taraudage 12 et, par conséquent, les risques de délaminage entre la surépaisseur 14 et la paroi d'enveloppe 13. En variante, d'autres combinaisons de fibres que fibres de verre/fibres de carbone peuvent être envisagées, en particulier avec des fibres de la surépaisseur 14 moins abrasives que celles de la paroi d'enveloppe 13.

En ne taraudant que la surépaisseur 14, un autre effet avantageux peut être obtenu. En effet, comme l'insert en aluminium 30 est destiné à être vissé à l'intérieur de la surépaisseur 14, des courants de corrosion galvanique peuvent être générés si les fibres utilisées au niveau de cette surépaisseur ne sont pas électriquement isolantes. En revanche, grâce aux fibres de verre ou, en variante, à d'autres fibres électriquement isolantes, aucun phénomène de couplage galvanique ne se produit entre les fibres de la surépaisseur 14 et la matière métallique, notamment l'aluminium, constituant l'insert 30 lorsque le filetage 33 est en prise avec le taraudage 12.

En pratique, le fait de ne tarauder que la surépaisseur 14 pour former le taraudage 12, sans que les coupes d'usinage n'atteignent la paroi d'enveloppe 13 du tube 10, se traduit, à l'état fini du tube 10, par le fait que, en coupe longitudinale comme aux figures 2 et 3, les fonds 15 des dents du taraudage 12, à l'extrémité 11 du tube, sont radialement plus proches de l'axe X-X que la face interne 13A de la paroi d'enveloppe 13, c'est-à-dire de la face interne de la partie courante non taraudée du tube.

Une fois le taraudage 12 réalisé, l'insert 30 est complètement vissé dans l'extrémité 11 du tube 10, par coopération du filetage 33 et du taraudage 12. Juste avant ce vissage, une matière adhésive peut être déposée sur le filetage et/ou le taraudage afin d'obtenir la couche adhésive 42.

L'embout 20 est par la suite vissé à l'intérieur de l'alésage 31 de l'insert 30 ou, en variante, le vissage de l'embout est effectué avant la solidarisation de l'insert à l'intérieur du tube.

Divers aménagements et variantes à la bielle 1 et à son procédé de fabrication décrits ci-dessus sont en outre envisageables :
- pour immobiliser en rotation l'insert 30 et le tube 10, d'autres moyens que la couche adhésive 42 peuvent être utilisés, notamment selon le niveau de couple résistant souhaité ; et/ou
- l'insert 30 peut être réalisé en d'autres matériaux qu'en aluminium ou en alliage aluminium ; en variante, cet insert est constitué d'un autre alliage métallique, d'une matière plastique ou d'un matériau composite à matrice en matière plastique.

## Revendications

1. Bielle (1), comportant :
- un tube (10) en un matériau composite à matrice en matière plastique,
- un embout (20) agencé à une extrémité longitudinale (11) du tube, et
- un insert (30) de liaison mécanique entre le tube et l'embout, solidarisé fixement au tube et pourvu d'un moyen (31) de fixation réglable avec l'embout,
**caractérisée en ce que** l'insert (30) est solidarisé au tube (10) par vissage de cet insert à l'intérieur de l'extrémité (11) du tube, en faisant coopérer une partie extérieurement filetée (33) de l'insert et une partie intérieurement taraudée complémentaire (12) de cette extrémité du tube.

2. Bielle suivant la revendication 1, **caractérisée en ce qu**'une couche adhésive (42) est interposée entre la partie taraudée (12) de l'extrémité (11) du tube (10) et la partie filetée (33) de l'insert (30).

3. Bielle suivant l'une des revendications 1 ou 2, **caractérisée en ce que**, en coupe longitudinale, les fonds (15) des dents de la partie taraudée (12) de l'extrémité (11) du tube (10) sont radialement plus proches de l'axe longitudinal (X-X) du tube que la face interne du reste non taraudé du tube.

4. Bielle suivant l'une quelconque des revendications précédentes, **caractérisée en ce que** le matériau composite constituant la partie taraudée (12) de l'extrémité (11) du tube (10) inclut des fibres moins abrasives que des fibres du matériau composite constituant le reste du tube.

5. Bielle suivant l'une quelconque des revendications précédentes, **caractérisée en ce que** le matériau composite constituant la partie taraudée (12) de l'extrémité (11) du tube inclut des fibres électriquement isolantes.

6. Bielle suivant l'une quelconque des revendications précédentes, **caractérisée en ce que** l'insert (30) est de nature métallique.

7. Bielle suivant la revendication 6, **caractérisée en ce que** l'insert (30) est réalisé en aluminium ou en alliage d'aluminium.

8. Bielle suivant l'une quelconque des revendications 1 à 5, **caractérisée en ce que** l'insert est constitué d'une matière plastique ou d'un matériau composite à matrice en matière plastique.

9. Procédé de fabrication d'une bielle (1), dans lequel on dispose d'un tube (10) en un matériau composite à matrice en matière plastique, d'un embout (20) à agencer à une extrémité longitudinale (11) du tube, et d'un insert (30) de liaison mécanique entre le tube et l'embout, cet insert étant à solidariser fixement au tube et l'embout **étant à fixer de manière réglable à l'insert,**
**caractérisé en ce qu**'il comporte des étapes successives selon lesquelles :
- de façon complémentaire, on filète extérieurement une partie d'extrémité (32) de l'insert (30) et on taraude intérieurement l'extrémité (11) du tube (10), et
- on visse la partie filetée (33) de l'insert dans la partie taraudée (12) de l'extrémité du tube.

10. Procédé suivant la revendication 9, **caractérisé en ce que**, pour obtenir le tube (10), on utilise une préforme fibreuse tubulaire qui, au niveau d'une de ses extrémités longitudinales, présente intérieurement une surépaisseur radiale de fibres et on injecte une matière plastique dans cette préforme, y compris dans sa surépaisseur, et **en ce que** le taraudage de l'extrémité (11) du tube est effectué uniquement dans la surépaisseur composite (14) ainsi obtenue.

## Claims

1. Connecting rod (1), comprising:
- a tube (10) of composite material with a plastic matrix,
- a ferrule (20) fitted to a longitudinal extremity (11) of the tube, and
- an insert (30) of mechanical connection between the tube and the ferrule, joined fixedly to the tube and provided with an adjustable means (31) of fixing with the ferrule,
**characterised by** the fact that the insert (30) is joined to the tube (10) by screwing this insert inside the extremity (11) of the tube, making a part of the insert with male thread (33) and a complementary part of this extremity of the tube with female thread co-operate.

2. Connecting rod according to claim 1, **characterised by** the fact that an adhesive layer (42) is interposed between the part with female thread (12) of the extremity (11) of the tube (10) and the part with male thread (33) of the insert (30).

3. Connecting rod according to one of the claims 1 or 2, **characterised by** the fact that, in longitudinal section, the bases (15) of the teeth of the part with female thread (12) of the extremity (11) of the tube (10) are radially nearer the longitudinal axis (X-X) of the tube than the internal face of the non-threaded rest of the tube.

4. Connecting rod according to any one of the preceding claims, **characterised by** the fact that the composite material constituting the part with female thread (12) of the extremity (11) of the tube (10) includes fibres less abrasive than fibres of the composite material constituting the rest of the tube.

5. Connecting rod according to any one of the preceding claims, **characterised by** the fact that the composite material constituting the part with female thread (12) of the extremity (11) of the tube (10) includes electrically insulating fibres.

6. Connecting rod according to any one of the preceding claims, **characterised by** the fact that the insert (30) is of metallic nature.

7. Connecting rod according to any one of the preceding claims, **characterised by** the fact that the insert (30) is made of aluminium or aluminium alloy.

8. Connecting rod according to any one of the claims 1 to 5, **characterised by** the fact that the insert (30) is constituted by a plastic material or a composite material with a plastic matrix.

9. Procedure of manufacturing a connecting rod (1), in which use is made of a tube (10) of a composite material with a plastic matrix, a ferrule (20) to be fitted to a longitudinal extremity (11) of the tube, and an insert (30) for a mechanical join between the tube and the ferrule, this insert having to be joined fixedly to the tube and the ferrule having to be fixed adjustably to the insert,
**characterised by** the fact that it comprises successive stages according to which:
- complementarily, a male thread is put on a part of the extremity (32) of the insert (30) and a female thread is put on the extremity (11) of the tube (10), and
- the part with the male thread (32) of the insert (30) is screwed into the part with female thread (12) of the extremity of the tube.

10. Procedure according to claim 9, **characterised by** the fact that, in order to obtain the tube (10), a tubular fibrous preformed unit is used which, at the level of one of its longitudinal extremities, presents in its interior a radial overthickness of fibres and a plastic material is injected into this preformed unit, including into its overthickness, and by the fact that the female thread of the extremity (11) of the tube is effected solely in the composite overthickness thus obtained.

## Patentansprüche

1. Pleuelstange (1) umfassend
- ein Rohr (10) aus einem Verbundmaterial mit einer Kunststoffmatrix,
- einen Ansatz (20), der an einem Längsende (11) des Rohrs angeordnet ist,
- einen Einsatz (30) zur mechanischen Verbindung zwischen dem Rohr und dem Ansatz, der fest mit dem Rohr verbunden ist und mit einem mit dem Ansatz einstellbaren Befestigungsmittel (31) versehen ist,
**dadurch gekennzeichnet, dass** der Ansatz (30) mit dem Rohr (10) durch Einschrauben dieses Einsatzes in das Innere des Endes (11) des Rohres verbunden ist, indem man einen mit einem Außengewinde (33) versehenen Bereich des Einsatzes und einen mit einem komplementären Innengewinde (12) versehenen Bereich dieses Endes des Rohres zusammenarbeiten lässt.

2. Pleuelstange nach Anspruch 1, **dadurch gekennzeichnet, dass** eine Haftschicht (42) zwischen dem mit dem Innengewinde versehenen Bereich (12) des Endes (11) des Rohres (10) und dem mit einem Außengewinde versehenen Bereich (33) des Einsatzes (30) angeordnet ist.

3. Pleuelstange nach einem der Ansprüche 1 oder 2, **dadurch gekennzeichnet, dass** im Längsschnitt gesehen, die befestigten Teile (15) der Zähne des mit Innengewinde versehenen Bereichs (12) des Endes (11) des Rohres (10) radial näher an der Längsachse (X-X) des Rohres als die Innenseite des übrigen nicht mit Innengewinde versehenen Bereichs des Rohres angeordnet sind.

4. Pleuelstange nach einem beliebigen der vorhergehenden Ansprüche, **dadurch gekennzeichnet, dass** das Verbundmaterial, das den mit dem Innengewinde versehenen Bereich (12) des Endes (11) des Rohres (10) bildet, weniger abrasive Fasern als die Fasern des den übrigen Teil des Rohres bildenden Verbundmaterials einschließt.

5. Pleuelstange nach einem beliebigen der vorhergehenden Ansprüche, **dadurch gekennzeichnet, dass** das den Bereich (12) des Endes (11) mit dem Innengewinde des Rohres bildende Verbundmaterial elektrisch isolierende Fasern einschließt.

6. Pleuelstange nach einem beliebigen der vorhergehenden Ansprüche, **dadurch gekennzeichnet, dass** der Einsatz (30) metallisch ist.

7. Pleuelstange nach Anspruch 6, **dadurch gekennzeichnet, dass** der Einsatz (30) aus Aluminium oder einer Aluminiumlegierung hergestellt ist.

8. Pleuelstange nach einem beliebigen der Ansprüche 1 bis 5, **dadurch gekennzeichnet, dass** der Einsatz aus einem Kunststoff oder aus einem Verbundmaterial mit Kunststoffmatrix hergestellt ist.

9. Verfahren zur Herstellung einer Pleuelstange (1), bei dem man über ein Rohr (10) aus einem Verbundmaterial mit einer Kunststoffmatrix, einen Ansatz (20), der an einem Längsende (11) eines Rohres anzuordnen ist, und einen Einsatz (30) zur mechanischen Verbindung zwischen dem Rohr und dem Ansatz verfügt, wobei der Einsatz fest mit dem Rohr zu verbinden ist und der Ansatz in einstellbarer Weise mit dem Einsatz zu verbinden ist,
**dadurch gekennzeichnet, dass** es aufeinander folgende Schritte umfasst, nach denen:
- man in komplementärer Weise einen Endbereich (32) des Einsatzes (30) mit einem Außengewinde versieht und das Ende (11) des Rohres (10) mit einem Innengewinde versieht, und
- man den mit dem Außengewinde versehenen Bereich (33) des Einsatzes in den mit dem Innengewinde versehenen Bereich (12) des Endes des Rohres einschraubt.

10. Verfahren nach Anspruch 9, **dadurch gekennzeichnet, dass** man, um das Rohr (10) zu erhalten, eine rohrförmige Faservorform verwendet, die an einem ihrer Längsenden im Inneren eine radiale Überdicke an Fasern aufweist und man ein Kunststoffmaterial in diese Vorform einspritzt, einschließlich in ihre Überdicke und dass das Innengewinde des Endes (11) des Rohres nur in der so erhaltenen Verbundüberdicke (14) eingebracht wird.
